# FASCICULE DE BREVET EUROPEEN

(11) **EP 2 186 714 B1**
(45) Date de publication et mention de la délivrance du brevet: **29.06.2011**
(21) Numéro de dépôt: 09290861.5
(22) Date de dépôt: 13.11.2009
(51) Int. Cl.: B62H 5/00, B62H 3/02, G07F 7/02, G07C 11/00

(54) **Dispositif et système de verrouillage de vélos en libre service**
Vorrichtung und System zum Verschließen von Selbstbedienungs-Fahrrädern
Device and system for locking self-service bicycles

(30) Priorité: 14.11.2008 FR 0806379
(43) Date de publication de la demande: 19.05.2010
(73) Titulaire: Tracetel, 78320 La Verriere (FR)
(72) Inventeur: Emery, Jean, 78470 St Remy les Chevreuse (FR); Benamara, Raouf, 78610 Le Perray en Yvelines (FR)
(74) Mandataire: Debay, Yves

(56) Documents cités:
- EP-A- 0 875 867
- EP-A- 1 241 635
- EP-A2- 1 926 060
- DE-A1- 19 955 723
- FR-A- 2 770 195
- US-A- 5 917 407

## Description

La présente invention concerne le domaine des dispositifs de verrouillage de vélos et plus particulièrement de vélos de location en libre service.

L'augmentation de la circulation automobile dans les zones urbaines pose des problèmes importants liés aux difficultés de déplacements et à une augmentation de la pollution. Ces zones urbaines sont alors amenées à trouver des solutions en incitant chacun d'éviter de prendre son automobile pour ses déplacements. Une solution est l'amélioration et une densification des transports en commun. Une autre solution est de favoriser l'utilisation du vélo en créant des pistes cyclables et en concevant un service public de location de vélos, de mise à disposition de vélos en libre service ou de stockage sécurisé de vélos particuliers.

Actuellement, certaines zones urbaines se sont dotées de parcs à vélos en libre service et d'abris collectifs à vélos sécurisés. Ces parcs sont constitués de stations automatisées réparties en réseau en plusieurs endroits dans la zone urbaine et d'abris collectifs aux abords des lieux de rupture de charge de transport (gares de trains, terminus de lignes de bus, centres routiers, etc.). Ces stations permettent l'emprunt ou le dépôt de vélos moyennant un abonnement ou une location ponctuelle. L'emprunt de vélo se fait à partir de bornes d'accès d'une station à l'aide d'un code confidentiel ou d'un badge d'abonnement qui permettent de prendre et d'utiliser le vélo comme divulgué dans le brevet FR 2 909 209.

Dans l'art antérieur, des bornes de verrouillage sont scellées individuellement à la chaussée. Elles sont alimentées électriquement et connectées au réseau par des câbles logés dans des longrines souterraines en béton. Ce type de bornes d'accès a un coût de mise en place important.

Un système existe qui pallie cet inconvénient en remplaçant les longrines souterraines par une lisse métallique aérienne sur laquelle sont répartis des points de verrouillage de vélo autonomes le long de la lisse. L'accès au service de ce système est centralisé par une borne client ou est activé par un lecteur de l'identifiant de l'usager au niveau de chaque point de verrouillage de vélo. Cependant, ce système nécessite l'utilisation de vélos spécifiques au système. Le document US 5,917,407, qui est considéré comme étant l'état de la technique le plus proche, divulgue le préambule de la revendication indépendante 1.

La présente invention a pour objet de pallier un ou plusieurs inconvénients de l'art antérieur en donnant une solution technique à un système de verrouillage et de déverrouillage protégeant du vol et contrôlant l'emprunt et le dépôt de tout type de vélos de série ou de particulier sans modification du vélo.

Pour atteindre ce but, le système de verrouillage composé d'au moins un poste de verrouillage fixe et d'au moins un élément de verrouillage embarqué sur un vélo possédant un système de direction composé d'une potence montée coulissant à une colonne de direction, le poste de verrouillage fixe étant composé d'au moins un logement destiné à recevoir l'élément de verrouillage embarqué sur un vélo,
caractérisé en ce que le poste de verrouillage est composé d'un mécanisme de basculement permettant de retenir dans le logement un vélo au niveau de l'élément de verrouillage embarqué et d'un émetteur-récepteur radiofréquence,
et en ce que l'élément de verrouillage embarqué est clippé de façon définitive autour d'un élément du vélo, un composant RFID (Radio-Frequency Identification) constitué d'au moins une antenne RF (Radiofréquence) étant disposée dans l'élément de verrouillage embarqué, un fil de ladite antenne faisant le tour de l'élément de verrouillage de telle façon que ledit fil de l'antenne est coupée si l'élément de verrouillage est démonté de l'élément du vélo.

Selon une autre particularité, l'élément de verrouillage embarqué possède une surface interne dont la géométrie empêche le coulissement de l'élément de verrouillage embarqué le long de l'élément du vélo.

Selon une autre particularité, l'élément de verrouillage embarqué est placé de telle manière que la hauteur entre l'élément de verrouillage embarqué et la surface de contact entre la roue avant du vélo et le sol est sensiblement égale à la hauteur entre le dispositif de basculement du poste de verrouillage et le sol.

Selon une autre particularité, le mécanisme de basculement est composé d'une gâche, montée pivotante au poste de verrouillage fixe, de géométrie adaptée pour que la gâche pivote quand le vélo muni de l'élément de verrouillage embarqué s'engage par poussée dans le logement du poste de verrouillage fixe et empêche la libération du vélo muni de l'élément de verrouillage embarqué lorsque l'élément de verrouillage embarqué est complètement engagé dans le logement grâce à une échancrure s'adaptant à la dimension du diamètre de l'élément de verrouillage embarqué.

Selon une autre particularité, le mécanisme de basculement est composé de deux butées placées symétriquement selon un plan vertical, chaque butée étant montée pivotante au poste de verrouillage fixe, chaque butée comportant un bec tourné vers le plan vertical adapté pour que les butées s'écartent l'une de l'autre par pivotement quand le vélo muni de l'élément de verrouillage embarqué s'engage par poussée dans le logement du poste fixe entre les butées et pour qu'elles ne s'écartent pas quand le vélo muni de l'élément de verrouillage embarqué est verrouillé, empêchant la libération du vélo muni de l'élément de verrouillage embarqué, chaque butée ayant une géométrie formant un logement adapté à l'élément de verrouillage embarqué lorsque les deux butées ne sont pas écartées.

Selon une autre particularité, l'élément de verrouillage embarqué possède une gorge sur sa face externe orientée dans un plan parallèle au déplacement du vélo dont la largeur est sensiblement égale à l'épaisseur de la gâche et dont la hauteur par rapport au sol est la même que la hauteur de la gâche par rapport au sol ajoutée d'un jeu tenant en compte au moins des imprécisions du sol, du gonflement des pneumatiques des vélos et des tolérances de pose du système de verrouillage.

Selon une autre particularité, l'élément de verrouillage embarqué possède une gorge sur sa face externe orientée dans un plan parallèle au déplacement du vélo dont la largeur est sensiblement égale à l'épaisseur des butées et dont la hauteur par rapport au sol est la même que la hauteur des butées par rapport au sol ajoutée d'un jeu tenant en compte au moins des imprécisions du sol, du gonflement des pneumatiques des vélos et des tolérances de pose du système de verrouillage.

Selon une autre particularité, la gâche pivote lors de l'engagement d'un vélo muni de l'élément embarqué fixé sur la potence d'un vélo dans le logement du poste de verrouillage fixe et de l'identification du composant RFID de l'élément de verrouillage embarqué par le récepteur-émetteur radiofréquence du poste de verrouillage fixe.

Selon une autre particularité, les butées pivotent lors de l'engagement d'un vélo muni de l'élément embarqué fixé sur la potence d'un vélo dans le logement du poste de verrouillage fixe et de l'identification du composant RFID de l'élément de verrouillage embarqué par le récepteur-émetteur radiofréquence du poste de verrouillage fixe.

Selon une autre particularité, le support d'une pluralité de postes de verrouillage est composé au moins:
- de deux poteaux
- d'une lisse sur laquelle est fixée la pluralité de postes de verrouillage fixes.

Selon une autre particularité, la lisse possède un rail permettant de faire coulisser la pluralité de postes de verrouillage fixes le long de la lisse, les postes de verrouillage fixes étant alimentés électriquement par un procédé de friction.

Selon une autre particularité, les poteaux du support sont aptes à contenir des câbles d'alimentation et de réseau permettant la continuité des câbles d'alimentation et de réseau de la lisse dans les poteaux de support.

Selon une autre particularité, le module est un système de verrouillage possédant un récepteur-émetteur radiofréquence apte à verrouiller, par exemple, une prise électrique de système de recharge de batterie de tout type de véhicules en libre service tels des vélos électriques, des scooters électriques ou des voiturettes électriques.

Un autre objectif de l'invention est de proposer un procédé de verrouillage faisant intervenir le système de l'invention.

Cet objectif est atteint par un procédé de verrouillage d'un vélo sur un poste de verrouillage fixe fixé à un support comportant une pluralité de postes de verrouillage fixes et comprenant un logement, un mécanisme de basculement et un émetteur-récepteur radiofréquence, le vélo possédant un élément de verrouillage embarqué adaptable à chacun des postes de verrouillage fixes, l'élément de verrouillage embarqué disposant d'un composant RFID, procédé caractérisé en ce qu'il comporte :
- une étape d'engagement du vélo dans le logement du poste de verrouillage fixe au niveau de l'élément de verrouillage embarqué,
- une étape d'identification par l'émetteur-récepteur radiofréquence du composant RFID disposé dans l'élément de verrouillage embarqué,
- une étape d'actionnement du mécanisme de basculement.
- une étape de verrouillage du vélo muni de l'élément de verrouillage embarqué sur le poste de verrouillage fixe.

Selon une variante de l'invention, le procédé de verrouillage d'un vélo sur un poste de verrouillage fixe est caractérisé en ce qu'il comprend :
- une étape d'identification par l'émetteur-récepteur radiofréquence d'un badge particulier possédé par le propriétaire du vélo,

D'autres particularités et avantages de la présente invention apparaîtront plus clairement à la lecture de la description ci-après, faite en référence aux dessins annexés, dans lesquels :
- la figure 1a représente une vue de côté d'une coupe de l'élément de verrouillage embarqué ;
- la figure 1b représente une vue de dessus d'une coupe de l'élément de verrouillage embarqué ;
- la figure 2 représente une vue cavalière de l'élément de verrouillage embarqué dont la ligne de clippage est ouverte ;
- les figures 3a, 3b, 3c et 3d représentent le principe de fonctionnement du mécanisme de basculement ;
- les figures 4a, 4b, 4c et 4d représentent le principe de fonctionnement du mécanisme de basculement selon un autre mode de réalisation ;
- La figure 5 représente une vue en éclaté du support.
- La figure 6 représente une vue en perspective du support muni d'une pluralité de postes de verrouillage fixes ;
- La figure 7 représente une vue en perspective du support muni d'une pluralité de postes de verrouillage fixes ayant reçu chacun un vélo.

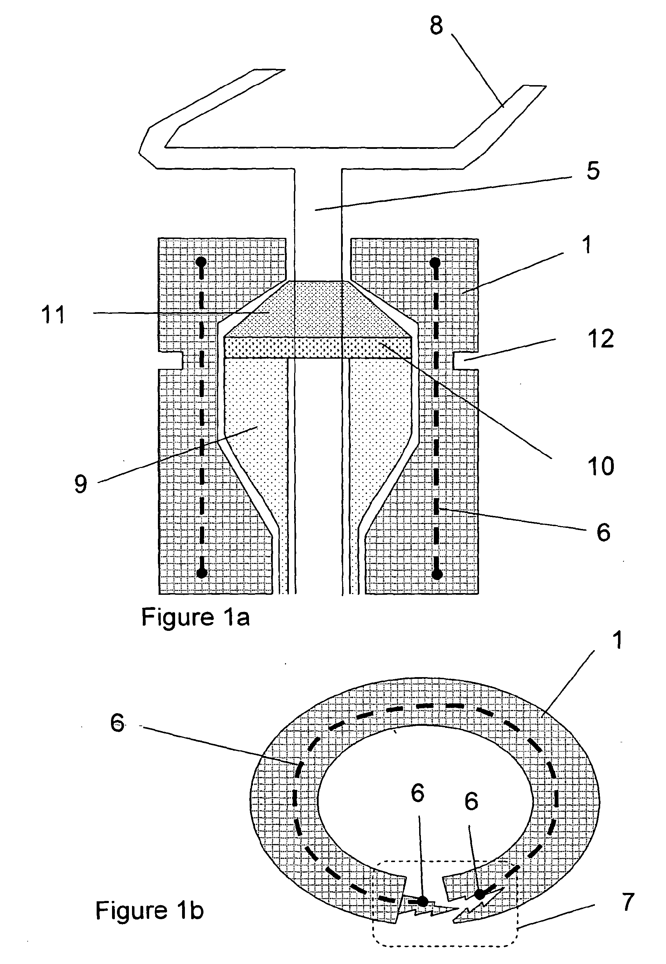

En référence aux figures 1a, 1b, 2 et 3a, l'invention concerne un système de verrouillage composé d'au moins un poste de verrouillage fixe (2) et d'au moins un élément de verrouillage embarqué (1) sur un vélo, le poste de verrouillage fixe (2) étant composé d'au moins un logement (3) destiné à recevoir l'élément de verrouillage embarqué (1).

Le poste de verrouillage fixe (2) est composé d'un mécanisme de basculement (4) permettant de retenir dans le logement (3) un élément du vélo au niveau de l'élément de verrouillage embarqué (1) et d'un émetteur-récepteur radiofréquence non représenté.

L'élément du vélo est, par exemple, une section de la potence du vélo, une section de la colonne de direction du vélo ou une section à cheval entre la colonne de direction et la potence du vélo, ou un tube vertical fixé à un panier, ou sur la structure du panier pour un vélo équipé d'un panier-guidon, ou sur le bas du cadre du vélo vers le pédalier, ou vers la potence de la selle du vélo.

L'élément de verrouillage embarqué (1) a une forme de révolution cylindrique ou tronconique clippé de façon définitive autour de l'élément du vélo (5) selon une ligne de clippage (7). Un composant RFID constitué d'au moins une antenne RF (6) est disposée dans l'élément de verrouillage embarqué (1). Un fil de l'antenne (6) fait le tour du de l'élément de verrouillage de telle façon que le fil de l'antenne (6) est coupée si l'élément de verrouillage embarqué (1) est démonté ou détruit.

L'élément de verrouillage embarqué (1) possède une surface interne dont la géométrie empêche le coulissement de l'élément de verrouillage embarqué (1) le long de l'élément du vélo (5).

Dans un mode de réalisation représenté figure 1a où l'élément du vélo est la section à cheval entre la potence du vélo et la colonne de direction du vélo, la géométrie de la surface interne de l'élément de verrouillage embarqué (1) est adaptée à la géométrie particulière du système de fixation de la potence (5) du vélo avec la colonne de direction (9), la potence (5) surmontée d'un guidon (8) étant montée de manière télescopique dans la colonne de direction (9) et étant fixée à une position donnée par rapport au sol à l'aide d'un écrou (10) surmonté d'un capuchon (11), la colonne de direction (9) étant composée, dans sa partie inférieure, de la fourche maintenant la roue avant du vélo.

Selon une autre configuration non-représentée, la géométrie de la surface interne de l'élément de verrouillage embarqué (1) est adaptée à la géométrie particulière d'une section de la colonne de direction (9) du vélo.

Selon une autre configuration non-représentée, la géométrie de la surface interne de l'élément de verrouillage embarqué (1) est adaptée à la géométrie particulière d'une section de la potence (5) du vélo.

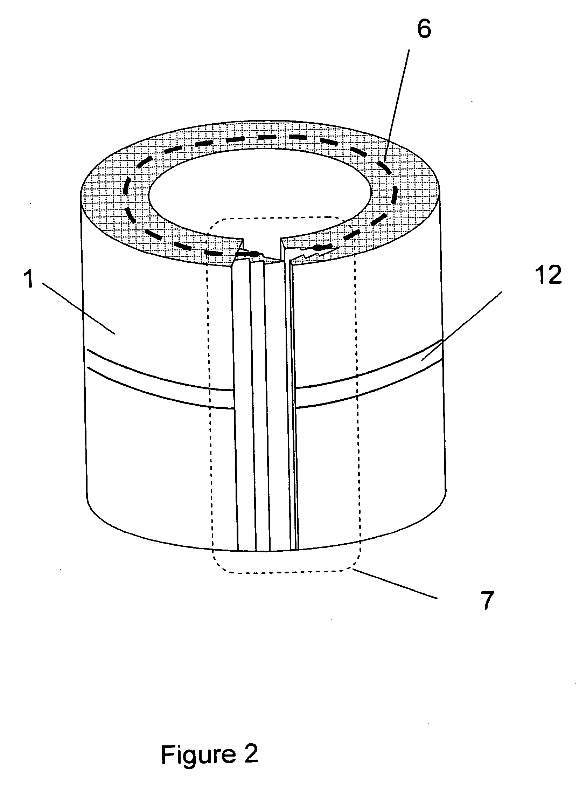

Selon un mode de réalisation représenté figure 2, la ligne de clippage (7) de l'élément de verrouillage embarqué est munie d'un système de clippage définitif. En cas de démontage ou destruction de l'élément de verrouillage embarqué (1) alors qu'il est clippé au vélo, le fil d'antenne (6) est coupé provoquant la destruction définitive de l'antenne (6) et, par conséquent, l'identification de l'élément de verrouillage embarqué (1) par l'émetteur-récepteur du poste de verrouillage fixe (2) est impossible, empêchant ainsi l'utilisation de l'élément de verrouillage embarqué (1) pour un autre vélo.

Selon un autre mode de réalisation non représenté, la ligne de clippage de l'élément de verrouillage embarqué (1) est une rainure ouverte.

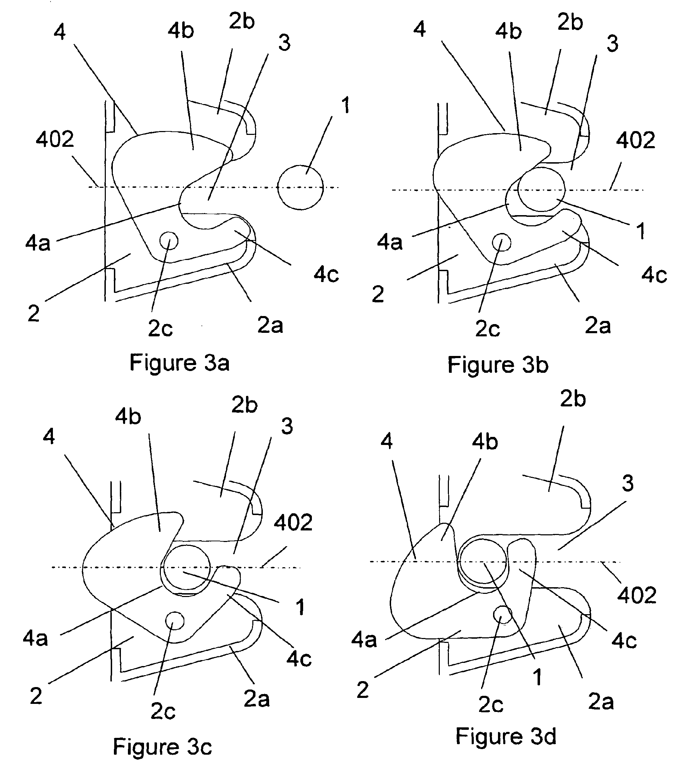

En référence aux figures 3a, 3b, 3c et 3d, le poste de verrouillage fixe (2) est formé de deux protubérances (2a, 2b), placées symétriquement selon un plan vertical (402), parallèles par rapport au sol, liées entre elles de telle façon qu'elles forment entre elles un logement (3) adapté à la surface courbe de l'élément de verrouillage embarqué (1) et à l'élément du vélo (5). Une gâche (4) est montée en rotation selon un axe (2c) situé au niveau d'une des deux protubérances (2a) formant ainsi un mécanisme de basculement. La gâche pivotante présente une échancrure (4a) s'adaptant à la surface courbe de l'élément de verrouillage embarqué (1) et se situant entre deux saillies. En référence à la figure 2a, lorsque la gâche est en position ouverte, une (4b) des deux saillies occupe en partie le logement (3). En référence aux figures 2b et 2c, lors de l'avancée de l'élément du vélo (5) muni de l'élément de verrouillage embarqué (1), l'élément de verrouillage embarqué (1) pousse la saillie (4b) occupant en partie le logement permettant la rotation de la gâche (4) autour de son axe (2c). L'autre saillie (4c) possédant l'axe (2c) de rotation de la gâche (4) s'avance en rotation de telle sorte que l'échancrure (4a) de la gâche (4) entoure l'élément de verrouillage embarqué (1) clippé sur l'élément du vélo (5) tel qu'illustré dans la figure 2d.

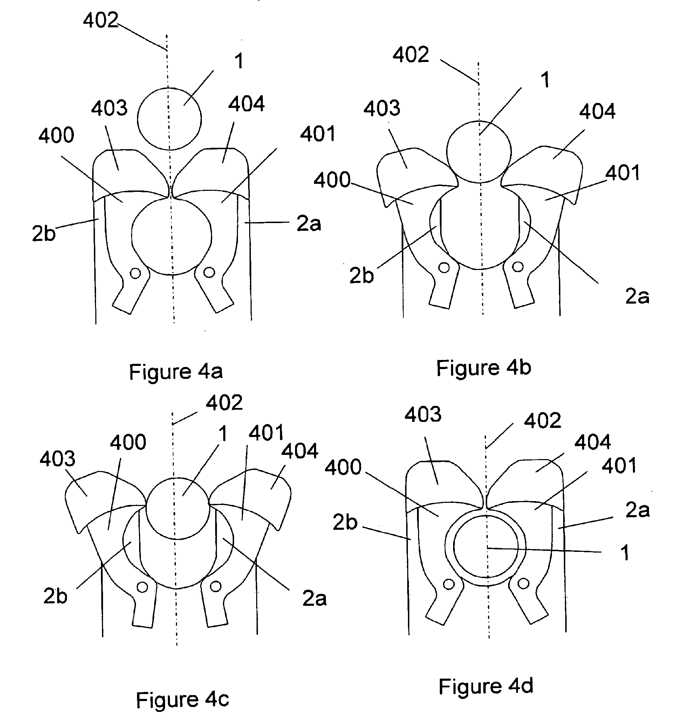

Selon un autre mode de réalisation du dispositif de basculement représentée figures 4a, 4b, 4c et 4d, deux butées (400, 401) placées symétriquement selon le plan vertical (402) des protubérances (2a, 2b) du poste de verrouillage fixe (2), chaque butée (400, 401) étant montée pivotante au poste de verrouillage fixe (2), chaque butée (400, 401) comportant un bec (403, 404) tourné vers le plan de symétrie (402), adapté pour que les butées (400, 401) s'écartent l'une de l'autre par pivotement quand un vélo muni de l'élément de verrouillage embarqué (1) s'engage par poussée dans le logement (3) du poste fixe (2) entre les butées (400, 401) et pour qu'elles ne s'écartent pas quand le vélo muni de l'élément de verrouillage embarqué (1) est verrouillé, empêchant la libération du vélo muni de l'élément de verrouillage embarqué (1), chaque butée (400, 401) ayant une géométrie formant un logement adapté à l'élément de verrouillage embarqué (1) lorsque les deux butées (401, 402) ne sont pas écartées.

L'élément de verrouillage embarqué (1) est placé de telle manière que la hauteur entre l'élément de verrouillage embarqué (1) et la surface de contact entre la roue avant du vélo et le sol est sensiblement égale à la hauteur entre le dispositif de basculement du poste de verrouillage fixe (2) et le sol ajouté d'un jeu tenant compte au moins des imprécisions du sol, du gonflement des pneumatiques des vélos et des tolérances de pose du système de verrouillage. Cette disposition de l'élément de verrouillage embarqué (1) sur le vélo permet un contact de la roue avant du vélo avec le sol, avec un jeu interdisant le retrait de la roue avant du vélo, empêchant ainsi le vol du vélo (20) même si le guidon est enlevé.

L'élément de verrouillage embarqué (1) présente une gorge (12) parallèle au sol faisant le tour de l'élément de verrouillage embarqué (1). Le plan contenant cette gorge (12) est situé à la même hauteur par rapport au sol que le plan où se situe la gâche ou les butées de manière à ce que cette hauteur soit sensiblement égale à la hauteur entre le point le plus bas de la roue avant du vélo et le plan contenant la gorge (12) ajouté d'un jeu tenant compte au moins des imprécisions du sol, du gonflement des pneumatiques des vélos et des tolérances de pose du système de verrouillage.

La rotation de la gâche (4) ou des butées (400, 401) est autorisée après identification du composant RFID de l'élément de verrouillage embarqué (1) par l'émetteur-récepteur du poste de verrouillage fixe (2).

Selon un autre mode de réalisation, la rotation de la gâche (4) ou des butées (400, 401) est autorisée après identification de l'utilisateur de vélo par un badge.

Selon un autre mode de réalisation, la rotation de la gâche (4) ou des butées (400, 401) est motorisée.

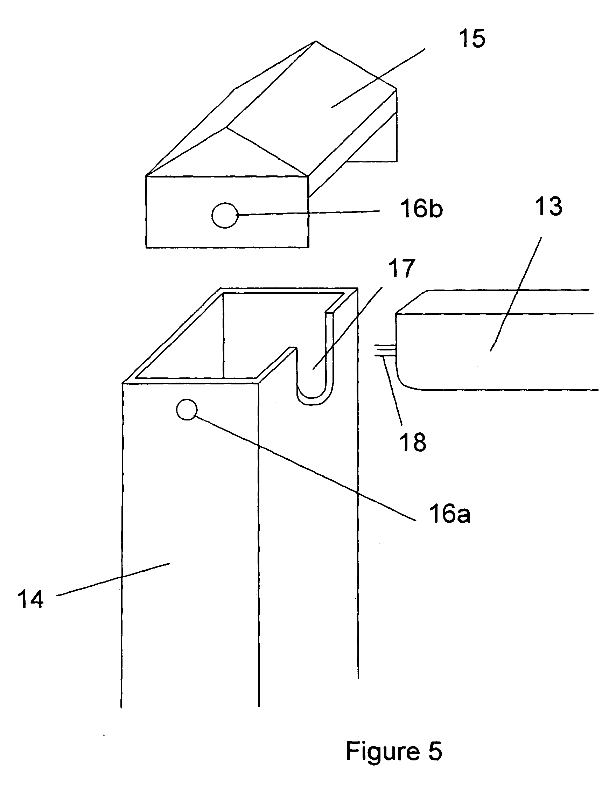

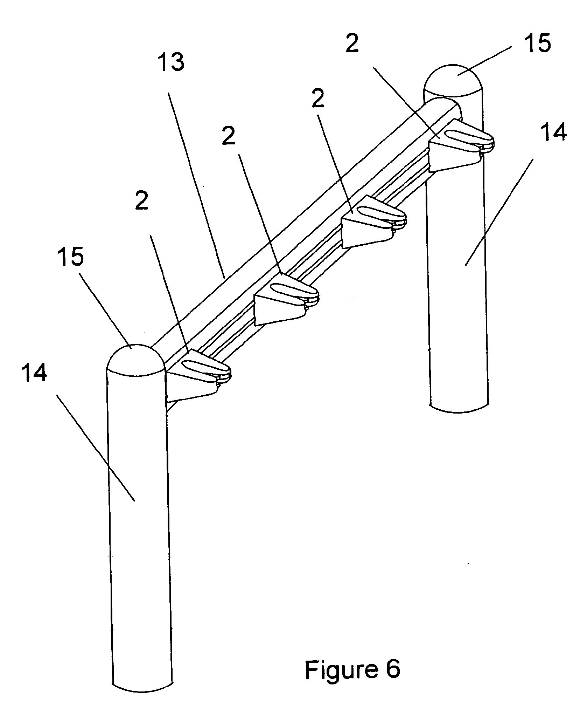

En référence aux figures 5 et 6, le poste de verrouillage fixe (2) est fixé parmi une pluralité de postes de verrouillage fixes (2) espacés régulièrement le long d'une lisse (13). La lisse (13) est encastrée dans deux échancrures (17) situées au sommet de deux poteaux (14). Les lisses étant encastrées dans les échancrures (17) des poteaux (14), l'échancrure (17) est fermée à l'aide d'un chapeau (15) adapté au sommet de chaque poteau (14). Le chapeau (15) est apte à être verrouillé sur chaque poteau (14) par un système de verrouillage (16b, 16a) empêchant ainsi l'enlèvement des lisses (13) sans déverrouillage. Les poteaux (14) sont aptes à contenir des câbles d'alimentation passant dans les lisses (13) permettant l'alimenter les postes de verrouillage fixes (2). Les poteaux (14) sont en outre aptes à contenir des câbles de réseau permettant de contrôler les postes de verrouillage fixes (2). Les poteaux (14) sont ainsi aptes à assurer la continuité des câbles (18) d'alimentation et de réseau de la lisse (13). Les poteaux (14) sont également aptes à permettre le branchement et le débranchement d'au moins un module tout en assurant la protection mécanique du branchement du module. Un module est, par exemple, un système de verrouillage possédant au moins un récepteur-émetteur radiofréquence apte à verrouiller une prise électrique de système de recharge de batterie de tout type de véhicules tels que des vélos électriques, des scooters électriques ou de voiturettes électriques. La prise électrique est verrouillée et la distribution de courant est activée après la reconnaissance d'un badge RFID par l'émetteur-récepteur du module. Elle est ensuite déverrouillée et la distribution de courant est désactivée après la reconnaissance du badge RFID par l'émetteur-récepteur du module.

Selon un autre mode de réalisation non représenté, la lisse (13) possède un rail sur lequel coulisse une pluralité de postes de verrouillage fixes (2) le long de la lisse (13), les postes de verrouillage fixes (2) étant alimentés électriquement par un procédé de friction.

Le procédé de verrouillage d'un vélo muni d'un élément de verrouillage embarqué (1) sur un poste de verrouillage fixe (2) comprend :
- une étape d'engagement de la potence (5) d'un vélo dans le logement (3) du poste de verrouillage fixe (2) au niveau de l'élément de verrouillage embarqué (1),
- une étape d'identification par l'émetteur-récepteur radiofréquence du composant RFID disposé dans l'élément de verrouillage embarqué (1),
- une étape d'actionnement de la gâche (4) du mécanisme de basculement par pivotement de la gâche (4),
- une étape de verrouillage de l'élément de verrouillage embarqué (1) sur le poste de verrouillage fixe (2).

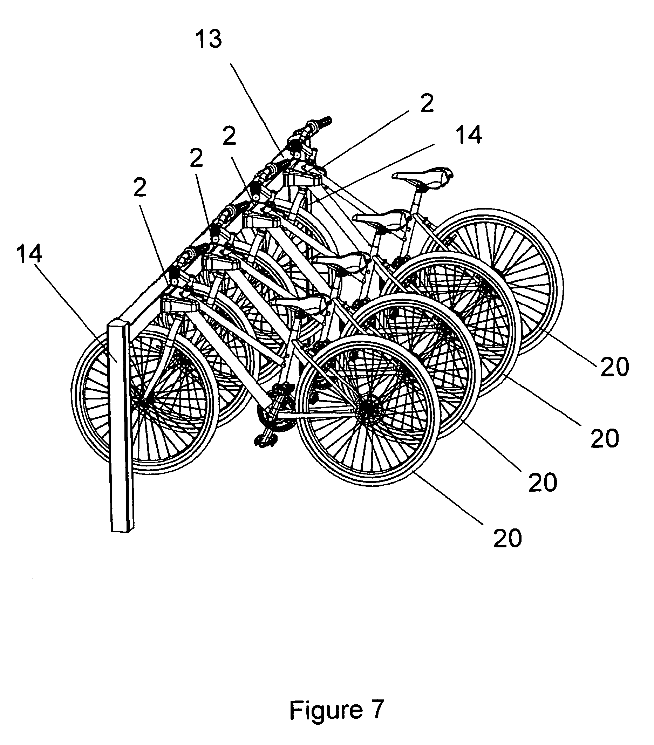

La figure 7 montre un exemple de réalisation d'une station de verrouillage composé de quatre postes de verrouillage fixes (2) montés sur une lisse (13) surmontant deux poteaux (14) où un vélo (20) est verrouillé dans chaque poste de verrouillage fixe (2).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de verrouillage composé d'au moins un poste de verrouillage fixe (2) et d'au moins un élément de verrouillage embarqué (1) sur un vélo possédant un système de direction composé d'une potence (5) montée coulissant à une colonne de direction (9), le poste de verrouillage fixe (2) étant composé d'au moins un logement (3) destiné à recevoir l'élément de verrouillage embarqué (1) sur le vélo,
**caractérisé en ce que** le poste de verrouillage fixe (2) est composé d'un mécanisme de basculement (4) permettant de retenir dans le logement (3) un vélo au niveau de l'élément de verrouillage embarqué (1) et d'un émetteur-récepteur radiofréquence,
et **en ce que** l'élément de verrouillage embarqué (1) est clippé de façon définitive autour d'une section d'un élément du vélo, un composant RFID (Radio-Frequency Identification) constitué d'au moins une antenne RF (6) (Radiofréquence) étant disposée dans l'élément de verrouillage embarqué (1), un fil de ladite antenne (6) faisant le tour de l'élément de verrouillage (1) de telle façon que ledit fil de l'antenne RF (6) est coupée si l'élément de verrouillage (1) est démonté de l'élément du vélo.

2. Système de verrouillage selon la revendication 1, **caractérisé en ce que** l'élément de verrouillage embarqué (1) possède une surface interne dont la géométrie empêche le coulissement de l'élément de verrouillage (1) le long de l'élément du vélo.

3. Système de verrouillage selon la revendication 1, **caractérisé en ce que** l'élément de verrouillage embarqué (1) est placé de telle manière que la hauteur entre l'élément de verrouillage embarqué (1) et la surface de contact entre la roue avant du vélo et le sol est sensiblement égale à la hauteur entre le dispositif de basculement du poste de verrouillage et le sol.

4. Système de verrouillage selon la revendication 1, **caractérisé en ce que** le mécanisme de basculement est composé d'une gâche (4), montée pivotante au poste de verrouillage fixe (2), de géométrie adaptée pour que la gâche (4) pivote quand le vélo muni de l'élément de verrouillage embarqué (1) s'engage par poussée dans le logement (3) du poste de verrouillage fixe (2) et empêche la libération du vélo muni de l'élément de verrouillage embarqué (1) lorsque l'élément de verrouillage embarqué (1) est complètement engagé dans le logement (3) grâce à une échancrure (4a) s'adaptant à la dimension du diamètre de l'élément de verrouillage embarqué (1).

5. Système de verrouillage selon la revendication 1, **caractérisé en ce que** le mécanisme de basculement est composé de deux butées (400, 401) placées symétriquement selon un plan vertical (402), chaque butée (400, 401) étant montée pivotante au poste de verrouillage fixe (2), chaque butée (400, 401) comportant un bec (403, 404) tourné vers le plan vertical (402) adapté pour que les butées (400, 401) s'écartent l'une de l'autre par pivotement quand le vélo muni de l'élément de verrouillage embarqué (1) s'engage par poussée dans le logement (3) du poste de verrouillage fixe (2) entre les butées (400, 401) et pour qu'elles ne s'écartent pas quand le vélo muni de l'élément de verrouillage embarqué (1) est verrouillé, empêchant la libération du vélo muni de l'élément de verrouillage embarqué (1), chaque butée (400, 401) ayant une géométrie formant un logement (3) adapté à l'élément de verrouillage embarqué (1) lorsque les deux butées (400, 401) ne sont pas écartées.

6. Système de verrouillage selon a revendication 4, **caractérisé en ce que** l'élément de verrouillage embarqué (1) possède une gorge (12) sur sa face externe orientée dans un plan parallèle au déplacement du vélo dont la largeur est sensiblement égale à l'épaisseur de la gâche (4) et dont la hauteur par rapport au sol est la même que la hauteur de la gâche (4) par rapport au sol ajouté d'un jeu tenant compte au moins des imprécisions du sol, du gonflement des pneumatiques des vélos et des tolérances de pose du système de verrouillage.

7. Système de verrouillage selon la revendication 5, **caractérisé en ce que** l'élément de verrouillage embarqué (1) possède une gorge (12) sur sa face externe orientée dans un plan parallèle au déplacement du vélo dont la largeur est sensiblement égale à l'épaisseur des butées (400, 401) et dont la hauteur par rapport au sol est la même que la hauteur des butées (400, 401) par rapport au sol ajouté d'un jeu tenant compte au moins des imprécisions du sol, du gonflement des pneumatiques des vélos et des tolérances de pose du système de verrouillage.

8. Système de verrouillage selon la revendication 4, **caractérisé en ce que** la gâche (4) pivote lors de l'engagement d'un vélo muni de l'élément embarqué (1) fixé sur la potence (5) d'un vélo dans le logement (3) du poste de verrouillage fixe (2) et de l'identification du composant RFID de l'élément de verrouillage embarqué (1) par le récepteur-émetteur du poste de verrouillage fixe (2).

9. Système de verrouillage selon la revendication 5, **caractérisé en ce que** butées (400, 401) pivotent lors de l'engagement d'un vélo muni de l'élément embarqué (1) fixé sur la potence (5) d'un vélo dans le logement (3) du poste de verrouillage fixe (2) et de l'identification du composant RFID de l'élément de verrouillage embarqué (1) par le récepteur-émetteur du poste de verrouillage fixe (2).

10. Système de verrouillage selon la revendication 1, **caractérisé en ce** le poste de verrouillage fixe (2) est fixé sur un support comportant une pluralité de postes de verrouillage fixes (2), le support d'une pluralité de postes de verrouillage fixes (2) étant composé au moins:
- de deux poteaux (14)
- d'une lisse (13) sur laquelle est fixée la pluralité de postes de verrouillage fixes (2).

11. Système de verrouillage selon la revendication 10, **caractérisé en ce que** la lisse (13) possède un rail permettant de faire coulisser la pluralité de postes de verrouillage fixes (2) le long de la lisse (13), les postes de verrouillage fixes (2) étant alimentés électriquement par un procédé de friction.

12. Système de verrouillage selon la revendication 11, **caractérisé en ce que** les poteaux (14) du support sont aptes à contenir des câbles d'alimentation et de réseau (18) permettant la continuité des câbles (18) d'alimentation et de réseau de la lisse (13) dans les poteaux de support (14).

13. Système de verrouillage selon la revendication 12, **caractérisé en ce que** le module est un système de verrouillage possédant un récepteur-émetteur radiofréquence apte à verrouiller, par exemple, une prise électrique de système de recharge de batterie de tout type de véhicules en libre service tels que des vélos électriques, des scooters électriques ou des voiturettes électriques.

14. Procédé de verrouillage d'un vélo utilisant un système de verrouillage selon les revendications 1 à 13, sur un poste de verrouillage fixe (2), fixé à un support, comportant une pluralité de postes de verrouillage fixes (2) et comprenant un logement (3), un mécanisme de basculement et un émetteur-récepteur radiofréquence, le vélo possédant un élément de verrouillage embarqué (1) adaptable à chacun des postes de verrouillage fixes (2), l'élément de verrouillage embarqué (1) disposant d'un composant RFID, procédé **caractérisé en ce qu'**il comporte :
- une étape d'engagement du vélo dans le logement (3) du poste de verrouillage fixe (2) au niveau de l'élément de verrouillage embarqué (1),
- une étape d'identification par l'émetteur-récepteur radiofréquence dans le poste de verrouillage fixe (2) du composant RFID disposée dans l'élément de verrouillage embarqué (1),
- une étape d'actionnement du mécanisme de basculement.
- une étape de verrouillage du vélo muni de l'élément de verrouillage embarqué (1) sur le poste de verrouillage fixe (2).

15. Procédé selon la revendication 14, **caractérisé en ce que** le procédé de verrouillage d'un vélo sur un poste de verrouillage fixe (2) est **caractérisé en ce qu'**il comprend :
- une étape d'identification par l'émetteur-récepteur radiofréquence d'un badge particulier possédé par le propriétaire du vélo.

## Claims

1. Locking system composed of at least one fixed locking column (2) and at least one embedded locking element (1) on a bicycle having a steering system composed of a stem (5) slidably mounted on steering column (9), the fixed locking column (2) being composed of at least one recess (3) intended to receive the embedded locking element (1) on the bicycle, **characterised in that** the fixed locking column (2) is composed of a pivoting mechanism (4) which makes it possible to retain a bicycle in the recess (3) in the region of the embedded locking element (1) and a radiofrequency transceiver, and **in that** the embedded locking element (1) is clipped definitively around a section of an element of the bicycle, a RFID (radio frequency identification) component consisting of at least one RF (radio frequency) antenna (6) being disposed in the embedded locking element (1), a wire of the said RF antenna (6) being passed around the locking element (1) in such a way that the said wire of the RF antenna (6) is cut if the locking element (1) is removed from the element of the bicycle.

2. Locking system as claimed in Claim 1, **characterised in that** the embedded locking element (1) has an internal surface of which the geometry prevents the sliding of the locking element (1) along the element of the bicycle.

3. Locking system as claimed in Claim 1, **characterised in that** the embedded locking element (1) is placed in such a way that the height between the embedded locking element (1) and the contact surface between the front wheel of the bicycle and the ground is substantially equal to the height between the pivoting device of the locking column and the ground.

4. Locking system as claimed in Claim 1, **characterised in that** the pivoting mechanism is composed of a lock plate (4) which is pivotably mounted on the fixed locking column (2) and has a geometry adapted so that the lock plate (4) pivots when the bicycle provided with the embedded locking element (1) engages by pushing into the recess (3) of the fixed locking column (2) and prevents the release of the bicycle provided with the embedded locking element (1) when the embedded locking element (1) is completely engaged in the recess (3) by means of a cutout (4a) adapting to the dimension of the diameter of the embedded locking element (1).

5. Locking system as claimed in Claim 1, **characterised in that** the pivoting mechanism is composed of two stops (400, 401) placed symmetrically in a vertical plane (402), each stop (400, 401) being pivotably mounted on the fixed locking column (2), each stop (400, 401) including a tip (403, 404) turned towards the vertical plane (402) adapted so that the stops (400, 401) move apart from one another by pivoting when the bicycle provided with the embedded locking element (1) engages by pushing in the recess (3) of the fixed locking column (2) between the stops (400, 401) and so that they do not move apart when the bicycle provided with the embedded locking element (1) is locked, preventing the release of the bicycle provided with the embedded locking element (1), each stop (400, 401) having a geometry forming a recess (3) adapted to the embedded locking element (1) when the two stops (400, 401) are not spaced apart.

6. Locking system as claimed in Claim 4, **characterised in that** the embedded locking element (1) has a groove (12) on its outer face oriented in a plane parallel to the displacement of the bicycle, the width of which is substantially equal to the thickness of the lock plate (4) and of which the height relative to the ground is the same as the height of the lock plate (4) relative to the ground plus a clearance taking account at least of the imprecisions of the ground, the inflation of the tyres of the bicycles and the tolerances of positioning of the locking system.

7. Locking system as claimed in Claim 5, **characterised in that** the embedded locking element (1) has a groove (12) on its outer face oriented in a plane parallel to the displacement of the bicycle, the width of which is substantially equal to the thickness of the stops (400, 401) and of which the height relative to the ground is the same as the height of the stops (400, 401) relative to the ground plus a clearance taking account at least of the imprecisions of the ground, the inflation of the tyres of the bicycles and the tolerances of positioning of the locking system.

8. Locking system as claimed in Claim 4, **characterised in that** the lock plate (4) pivots during the engagement of a bicycle provided with the embedded element (1) fixed on the bicycle stem (5) in the recess (3) of the fixed locking column (2) and the identification of the RFID component of the embedded locking element (1) by the transceiver of the fixed locking column (2).

9. Locking system as claimed in Claim 5, **characterised in that** stops (400, 401) pivot during the engagement of a bicycle provided with the embedded element (1) fixed on the bicycle stem (5) in the recess (3) of the fixed locking column (2) and the identification of the RFID component of the embedded locking element (1) by the transceiver of the fixed looking column (2).

10. Locking system as claimed in Claim 1, **characterised in that** the fixed locking column (2) is fixed on a support including a plurality of fixed locking columns (2), the support of a plurality of fixed locking columns (2) being composed of at least:
- two posts (14)
- a crossbar (13) on which the plurality of fixed locking columns (2) are fixed.

11. Locking system as claimed in Claim 10, **characterised in that** the crossbar (13) has a rail which makes it possible for the plurality of fixed locking columns (2) to slide along the crossbar (13), the fixed locking columns (2) being supplied with electrical power by a friction process.

12. Locking system as claimed in Claim 11, **characterised in that** the posts (14) f the support are capable of containing power and network cables (18) which enable the continuity of the power and network cables (18) of the crossbar (13) in the support posts (14).

13. Locking system as claimed in Claim 12, **characterised in that** the module is a locking system having a radiofrequency transceiver capable of locking for example an electrical socket of a battery recharging system for any type of self-service vehicles such as electric bicycles, electric scooters or small electric cars.

14. Method of locking a bicycle using a locking system as claimed in any one of Claims 1 to 13 on a fixed locking column (2), fixed on a support, including a plurality of fixed locking columns (2) and comprising a recess (3), a pivoting mechanism and a radiofrequency transceiver, the bicycle having an embedded locking element (1) which can be adapted to each of the fixed locking columns (2), the embedded locking element (1) having a RFID component, the method being **characterised in that** it includes:
- a step of engagement of the bicycle in the recess (3) of the fixed locking column (2) in the region of the embedded locking element (1),
- a step of identification by the radiofrequency transceiver in the fixed locking columns (2) of the RFID component disposed in the embedded locking element (1),
- a step of actuating the pivoting mechanism,
- a step of locking the bicycle provided with the embedded locking element (1) on the fixed locking column (2).

15. Method as claimed in Claim 14, **characterised in that** the method of locking a bicycle on a fixed locking column (2) is **characterised in that** it comprises:
- a step of identification by the radiofrequency transceiver of a special badge possessed by the owner of the bicycle.

## Patentansprüche

1. Verriegelungssystem, das zusammengesetzt ist aus mindestens einer ortsfesten Verriegelungsstelle (2) und mindestens einem Verriegelungselement (1), das in ein Fahrrad eingebaut ist, das ein aus einer gleitend in einem Steuerrohr (9) montierten Lenkersäule (5) gebildetes Lenksystem aufweist, wobei die ortsfeste Verriegelungsstelle (2) aus mindestens einer Aufnahme (3) gebildet ist, die zum Aufnehmen des in das Fahrrad eingebauten Verriegelungselements (1) bestimmt ist,
**dadurch gekennzeichnet, dass** die ortsfeste Verriegelungsstelle (2) aus einem Schwenkmechanismus (4), der das Halten eines Fahrrades in der Aufnahme (3) auf der Höhe des eingebauten Verriegelungselements (1) ermöglicht, und aus einem Radiofrequenz-Sender-Empfänger zusammengesetzt ist,
und dass das eingebaute Verriegelungselement (1) fest um einen Teilabschnitt eines Elements des Fahrrades herumgeklammert ist, wobei eine aus mindestens einer RF-Antenne (6) (Radiofrequenz) bestehende RFID-Komponente (Radio-Frequenz-Identifikation) in dem eingebauten Verriegelungselement (1) angeordnet ist, wobei ein Anschlussdraht der Antenne (6) derart um das Verriegelungselement (1) herumverläuft, dass der Anschlussdraht der RF-Antenne (6) abgetrennt wird, wenn das Verriegelungselement (1) von dem Element des Fahrrades abmontiert wird.

2. Verriegelungssystem gemäß Anspruch 1, **dadurch gekennzeichnet, dass** das eingebaute Verriegelungselement (1) eine Innenfläche aufweist, deren Geometrie das Gleiten des Verriegelungselements (1) entlang dem Element des Fahrrades verhindert.

3. Verriegelungssystem gemäß Anspruch 1, **dadurch gekennzeichnet, dass** das eingebaute Verriegelungselement (1) derart angeordnet ist, dass die Höhe zwischen dem eingebauten Verriegelungselement (1) und der Kontaktfläche zwischen dem Vorderrad des Fahrrades und dem Boden im Wesentlichen gleich der Höhe zwischen der Schwenkvorrichtung der Verriegelungsstelle und dem Boden ist.

4. Verriegelungssystem gemäß Anspruch 1, **dadurch gekennzeichnet, dass** der Schwenkmechanismus aus einem Schließhaken (4) zusammengesetzt ist, der an der ortsfesten Verriegelungsstelle (2) drehbar gelagert ist, mit einer Geometrie, die angepaßt ist, damit der Schließhaken (4) sich dreht, wenn das mit dem eingebauten Verriegelungselement (1) ausgestattete Fahrrad durch Schieben mit der Aufnahme (3) der ortsfesten Verriegelungsstelle (2) in Eingriff gelangt, und das Freigeben des mit dem eingebauten Verriegelungselement (1) ausgestatteten Fahrrades verhindert, wenn das eingebaute Verriegelungselement (1) vollständig mit der Aufnahme (3) in Eingriff ist, dank einer Aussparung (4a), die sich an die Abmessung des Durchmessers des eingebauten Verriegelungselements (1) anpasst.

5. Verriegelungssystem gemäß Anspruch 1, **dadurch gekennzeichnet, dass** der Schwenkmechanismus aus zwei Anschlägen (400, 401) zusammengesetzt ist, die entlang einer vertikalen Ebene (402) symmetrisch angeordnet sind, wobei jeder Anschlag (400, 401) an der ortsfesten Verriegelungsstelle (2) drehbar gelagert ist, wobei jeder Anschlag (400, 401) eine Spitze (403, 404) aufweist, die zu der vertikalen Ebene (402) hin ausgerichtet ist, die angepasst ist, damit die Anschläge (400, 401) durch Drehen auseinandergespreizt werden, wenn das mit dem eingebauten Verriegelungssystem (1) ausgestattete Fahrrad durch Schieben mit der Aufnahme (3) der ortsfesten Verriegelungsstelle (2) zwischen den Anschlagen (400, 401) in Eingriff gelangt, und damit sie nicht gespreizt werden, wenn das mit dem eingebauten Verriegelungselement (1) ausgestattete Fahrrad verriegelt ist, wodurch das Freigeben des mit dem eingebauten Verriegelungselement (1) ausgestatteten Fahrrades verhindert wird, wobei jeder Anschlag (400, 401) eine Geometrie aufweist, die eine Aufnahme (3) ausbildet, die an das eingebaute Verriegelungselement (1) angepasst ist, wenn die zwei Anschläge (400, 401) nicht gespreizt sind.

6. Verriegelungssystem gemäß Anspruch 4, **dadurch gekennzeichnet, dass** das eingebaute Verriegelungselement (1) an seiner Außenfläche eine Auskehlung (12) aufweist, die in einer Ebene parallel, zu der Verlagerung des Fahrrades ausgerichtet ist, deren Breite im Wesentlichen gleich der Dicke des Schließhakens (4) ist, und deren Höhe bezüglich des Bodens gleich wie die Höhe des Schließhakens (4) bezüglich des Bodens ist, zuzüglich eines Spiels unter Berücksichtigung zumindest der Unebenheiten des Bodens, der Füllung der Reifen der Fahrräder und der Einbautoleranzen des Verriegelungssystems.

7. Verriegelungssystem gemäß Anspruch 5, **dadurch gekennzeichnet, dass** das eingebaute Verriegelungselement (1) an seiner Außenseite eine Auskehlung (12) aufweist, die in einer Ebene parallel zu der Verlagerung des Fahrrades ausgerichtet ist, deren Breite im Wesentlichen gleich der Dicke der Anschläge (400, 401) ist und deren Höhe bezüglich des Bodens gleich wie die Höhe der Anschläge (400, 401) bezüglich des Bodens ist, zuzüglich eines Spiels unter Berücksichtigung mindestens der Unebenheiten des Bodens, der Füllung der Reifen der Fahrräder und der Einbautoleranzen des Verriegelungssystems.

8. Verriegelungssystem gemäß Anspruch 4, **dadurch gekennzeichnet, dass** sich der Schließhaken (4) beim Eingreifen eines mit dem an der Fahrrad-Lenkersäule (5) befestigten eingebauten Element (1) ausgestatteten Fahrrades in die Aufnahme (3) der ortsfesten Verriegelungsstelle (2) und beim Identifizieren der RFID-Komponente des eingebauten Verriegelungselements (1) durch den Sender-Empfänger der ortsfesten Verriegelungsstelle (2) dreht.

9. Verriegelungssystem gemäß Anspruch 5, **dadurch gekennzeichnet, dass** sich die Anschläge (400, 401) beim Eingreifen eines mit dem an der Fahrrad-Lenkersäule (5) befestigten eingebauten Element (1) ausgestatteten Fahrrades in die Aufnahme (3) der festen Verriegelungsstelle (2) und beim Identifizieren der RFID-Komponente des eingebauten Verriegelungselements (1) durch den Sender-Empfänger der ortsfesten Verriegelungsstelle (2) drehen.

10. Verriegelungssystem gemäß Anspruch 1, **dadurch gekennzeichnet, dass** die ortsfeste Verriegelungsstelle (2) an einer Stütze befestigt ist, die eine Mehrzahl von ortsfesten Verriegelungsstellen (2) aufweist, wobei die Stütze einer Mehrzahl von ortsfesten Verriegelungsstellen (2) zusammengesetzt ist aus mindestens:
zwei Pfosten (14),
einem Trägerbalken (13), an dem die Mehrzahl von ortsfesten Verriegelungsstellen (2) befestigt ist.

11. Verriegelungssystem gemäß Anspruch 10, **dadurch gekennzeichnet, dass** der Trägerbalken (13) eine Schiene aufweist, die das Verschieben der Mehrzahl von ortsfesten Verriegelungsstellen (2) entlang dem Trägerbalken (13) ermöglicht, wobei die ortsfesten Verriegelungsstellen (2) durch einen Reibungsprozess mit Strom versorgt werden.

12. Verriegelungssystem gemäß Anspruch 11, **dadurch gekennzeichnet, dass** die Pfosten (14) der Stütze geeignet sind, Versorgung- und Netzkabel (18) aufzunehmen, die das Weiterführen der Versorgungs- und Netzkabel (18) des Trägerbalkens (13) in den Stützpfosten (14) ermöglichen.

13. Verriegelungssystem gemäß Anspruch 12, **dadurch gekennzeichnet, dass** das Modul ein Verriegelungssystem ist, das einen Radiofrequenz-Sender-Empfänger aufweiset, der geeignet ist, zum Beispiel einen elektrischen Anschluss für ein Batterie-Auflade-System für jede Art von Selbstbedienungsfahrzeugen, zum Beispiel Elektrofahrrädern, Elektrorollern oder Elektrohandwagen zu verriegeln.

14. Verfahren zum Verriegeln eines Fahrrades mittels eines Verriegelungssystems gemäß den Ansprüchen 1 bis 13 an einer ortsfesten Verriegelungsstelle (2), die an einer eine Mehrzahl von ortsfesten Verriegelungsstellen (2) aufweisenden Stütze befestigt ist und eine Aufnahme (3), einen Schwenkmechanismus und einen Radiofrequenz-Sender-Empfänger aufweist, wobei das Fahrrad ein eingebautes Verriegelungselement (1) aufweist, das an jede der ortsfesten Verriegelungsstellen (2) anpassbar ist, wobei das eingebaute Verriegelungselement (1) eine RFID-Komponente aufweist, wobei das Verfahren **dadurch gekennzeichnet ist, dass** es aufweist:
einen Schritt des In-Eingriff-Bringens des Fahrrades mit der Aufnahme (3) der ortsfesten Verriegelungsstelle (2) auf der Höhe des eingebauten Verriegelungselements (1),
einen Schritt des Identifizierens der in dem eingebauten Verriegelungselement (1) angeordneten RFID-Komponente durch den Radiofrequenz-Sender-Empfänger in der ortsfesten Verriegelungsstelle (2),
einen Schritt des Betätigens des Schwenkmechanismus,
einen Schritt des Verriegelns des mit dem eingebauten Verriegelungselement (1) ausgestatteten Fahrrades an der ortsfesten Verriegelungsstelle (2).

15. Verfahren gemäß Anspruch 14, **dadurch gekennzeichnet, dass** das Verfahren zum Verriegeln eines Fahrrades an einer ortsfesten Verriegelungsstelle (2) **dadurch gekennzeichnet ist, dass** es aufweist:
einen Schritt des Identifizierens einer dem Besitzer des Fahrrades gehörenden besonderen Kennzeichnung durch den Radiofrequenz-Sender-Empfänger.
